(19) Europäisches Patentamt / European Patent Office / Office européen des brevets

(11) **EP 2 842 536 A1**

(12) **EUROPEAN PATENT APPLICATION**

(43) Date of publication:
04.03.2015 Bulletin 2015/10

(51) Int Cl.:
*A61H 3/04* (2006.01)

(21) Application number: 14175676.7

(22) Date of filing: 03.07.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 08.07.2013 JP 2013142687

(71) Applicant: **Funai Electric Co., Ltd.**
**Daito-shi,**
**Osaka 574-0013 (JP)**

(72) Inventor: **Shirakawa, Tomohiro**
**Daito-shi, Osaka 574-0013 (JP)**

(74) Representative: **Global IP Europe**
**Patentanwaltskanzlei**
**Pfarrstraße 14**
**80538 München (DE)**

(54) **Hand cart**

(57) A hand cart includes a body component, a grip component, a support component, a position adjustment mechanism, and a controller. The grip component is arranged relative to the body component at a grip position. The support component is arranged to link the body component and the grip component. The position adjustment mechanism is configured to adjust the grip position of the grip component. The controller is configured to operate the position adjustment mechanism such that displacement of the grip position with respect to a reference position due to an inclination of the body component is corrected.

FIG. 1

**Description**

CROSS-REFERENCE TO RELATED APPLICATIONS

This application claims priority to Japanese Patent Application No. 2013-142687 filed on July 8, 2013. The entire disclosure of Japanese Patent Application No. 2013-142687 is hereby incorporated herein by reference.

BACKGROUND

Field of the Invention

The present invention generally relates to a hand cart.

Background Information

Hand carts that are moved by the user's movement, such as walking assist carts, strollers, trailers, and the like, are in widespread use. Most hand carts have wheels on their bottom part, and the user can easily move them by holding onto a part of the hand cart while walking. Therefore, these devices are popular because they allow the user to carry around heavy loads or a child with less effort.

A child or a heavy load is held in the body component of these hand carts, and the body component is generally provided at a position close to the ground in order to give the device good stability (to lower the center of gravity). By contrast, the user's hands when the user is standing are located farther away from the ground. In view of this, a grip component extends from the body component up to the height of the user's hands to make up for this height difference, and the user can walk in a comfortable posture by gripping this grip component.

However, the position of the grip frame with respect to the user is different when the hand cart moves over level ground (a level road), and when it moves over sloped ground (a sloped road). For example, on a downhill slope, the position of the grip frame moves downward and farther away from the user in the forward direction than on a level road. Therefore, depending on the amount of movement of the position of the grip frame, there is the risk that the user will be forced to walk in an uncomfortable posture.

With a conventional shopping cart, a grip frame is rotatably attached to a main frame, and the user can adjust the position of the grip frame by adjusting the angle of the grip frame (see Japanese Utility Model Registration No. 3152568, for example).

SUMMARY

It has been discovered that the fact that the position of the grip frame has to be adjusted manually means that the operation entails considerable work on the part of the user.

One aspect is to provide a hand cart that allows the user to move in a comfortable posture regardless of the slope of the ground.

In view of the state of the known technology, a hand cart includes a body component, a grip component, a support component, a position adjustment mechanism, and a controller. The grip component is arranged relative to the body component at a grip position. The support component is arranged to link the body component and the grip component. The position adjustment mechanism is configured to adjust the grip position of the grip component. The controller is configured to operate the position adjustment mechanism such that displacement of the grip position with respect to a reference position due to an inclination of the body component is corrected.

Also other objects, features, aspects and advantages of the present disclosure will become apparent to those skilled in the art from the following detailed description, which, taken in conjunction with the annexed drawings, discloses one embodiment of the hand cart.

BRIEF DESCRIPTION OF THE DRAWINGS

Referring now to the attached drawings which form a part of this original disclosure:

FIG. 1 illustrates elevational views, a top plan view and a detail view of a walking assist cart in accordance with a first embodiment;
FIG. 2 is a functional block diagram of the walking assist cart in accordance with the first embodiment;
FIG. 3 is a schematic diagram of a length adjustment mechanism of a support component of the walking assist cart in accordance with the first embodiment;

FIG. 4 is a schematic diagram of an angle adjustment mechanism of a grip component of the walking assist cart in accordance with the first embodiment;

FIG. 5 illustrates a reference position and a displacement value on a downhill slope;

FIG. 6 illustrates the inclination angle of the support component and the inclination angle of the grip component;

FIG. 7 illustrates the length of the support component and the length of the grip component;

FIG. 8 illustrates the reference position and the displacement value on an uphill slope;

FIG. 9 is a flowchart of the processing executed by a controller of the walking assist cart in accordance with the first embodiment;

FIG. 10 is a first diagram of a method for correcting the displacement value;

FIG. 11 is a second diagram of a method for correcting the displacement value;

FIG. 12 is a third diagram of a method for correcting the displacement value;

FIG. 13 is a schematic diagram of an angle adjustment mechanism of a support component of a walking assist cart in accordance with a second embodiment;

FIG. 14 is a schematic diagram of a length adjustment mechanism of a grip component of the walking assist cart in accordance with the second embodiment;

FIG. 15 is a schematic diagram of angle and length adjustment mechanisms of a support component of a walking assist cart in accordance with a third embodiment; and

FIG. 16 is a schematic diagram of angle and length adjustment mechanisms of a grip component of a walking assist cart in accordance with a fourth embodiment.

## DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

## FIRST EMBODIMENT

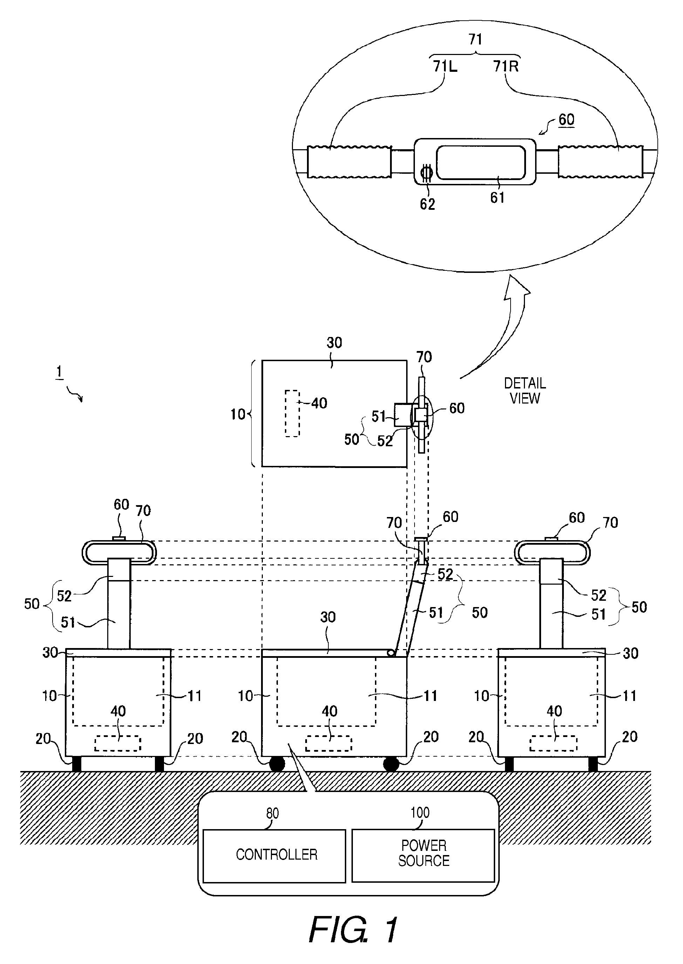

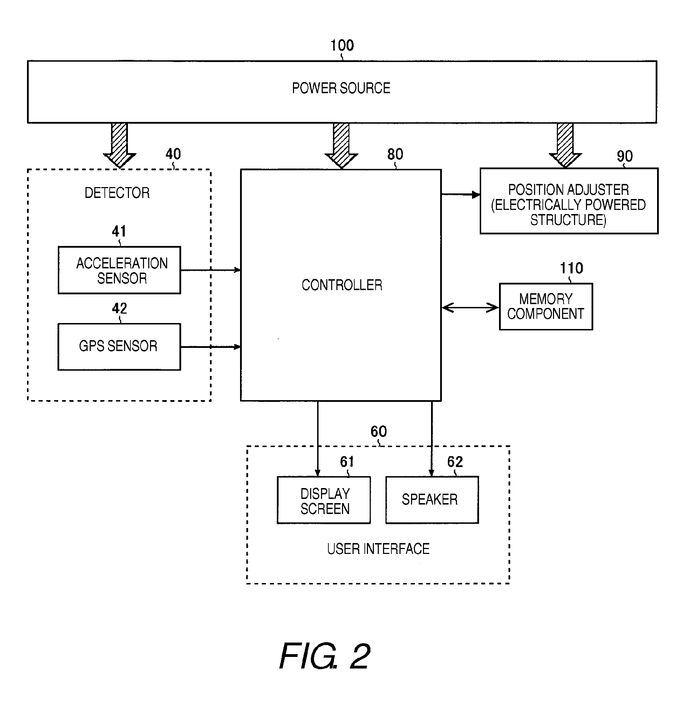

Referring initially to FIGS. 1 and 2, a walking assist cart 1(e.g., a hand cart) is illustrated in accordance with a first embodiment. In this embodiment and subsequent embodiments, a walking assist cart will be explained as an example of the hand cart of the present invention. However, the walking assist cart will be provided for illustration only and not for the purpose of limiting the invention. The present invention can also be equally applied to a hand cart as defined by the appended claims and their equivalents. In particular, examples of the hand cart include the walking assist carts, strollers, push or pull carts, wheeled walkers, wheeled canes, wheelchairs, and so forth. Also, the hand cart is basically a manually propelled device that is pushed or pulled by a person. However, the hand cart can also include a prime mover, such as a motor or an engine, which drives the hand cart. Furthermore, the hand cart basically is a wheeled vehicle with at least one wheel. However, the hand cart can be other types of vehicles, such as tracked vehicles, sleds, and so forth.

FIG. 1 illustrates elevational views, a top plan view and a detail view of the walking assist cart 1, FIG. 2 is a functional block diagram of the walking assist cart 1. The lower part in FIG. 1 illustrates a front elevational view, a left side elevational view, and a rear elevational view, in that order starting from the left side of the drawing. The middle part in FIG. 1 illustrates a top plan view of the walking assist cart 1. The upper part in FIG. 1 illustrates a detail view of a handle portion of the walking assist cart 1.

In the illustrated embodiment, the walking assist cart 1 is a manual propulsion vehicle (e.g., a wheeled walker or a rollator) that serves both to assist the user (primarily an elderly person with limited mobility) and to function as a chair for resting on and a basket for carrying things. This walking assist cart 1 has a body component 10, wheels 20, a seat 30, a detector 40, a support component 50, a user interface 60, a grip component 70, a controller 80, a position adjuster 90 (e.g., a position adjustment mechanism, a length adjustment mechanism, an angle adjustment mechanism), a power source 100, and a memory component 110. In the illustrated embodiment, the position adjuster 90 has an electrically powered structure.

The body component 10 is the chassis of the walking assist cart 1, and the previously mentioned constituent elements 20 to 110 are attached to this. A space is provided as a luggage compartment 11 inside the body component 10 (under the seat 30). Stainless steel, an aluminum alloy, or the like can be used as the material of the frame that forms the body component 10.

The wheels 20 are wheel-shaped members that turn as the user walks and thereby move the body component 10 over the ground. The wheels 20 include a pair of drive wheels that rotate around an axle when pushed by the user, and a pair of follower wheels (e.g., free wheels) used for steering. Of course, the drive wheels can also be driven by an assist power from a prime mover, such as a motor or an engine.

The seat 30 is a flat member on which the user places his or her hips when seated. The seat 30 also functions as a lid for the luggage compartment 11, and is attached so that the upper face opening in the luggage compartment 11 can be opened and closed.

The detector 40 forms detection means used to acquire information that is necessary to determine the inclination angle of the body component 10. As shown in FIG. 1, for example, the detector 40 is disposed under the luggage compartment 11. The detector 40 includes, for example, an acceleration sensor 41, a gyro sensor (not shown), and a GPS sensor 42. In the illustrated embodiment, for example, when determining the inclination angle of the body component 10 with the GPS sensor 42, the inclination angle of the ground (i.e., slope angle) on which the walking assist cart 1 is currently located is determined based on map information that includes information indicative of the inclination angle of the ground and is stored in the memory component 110 (discussed below), and current location information about the walking assist cart 1 that is obtained with the GPS sensor 42. Then, this determination result of the inclination angle of the ground is determined as the inclination angle of the body component 10. In FIG. 2, the detector 40 has both the acceleration sensor 41 and the GPS sensor 42. However, the detector 40 can instead have just one or the other. The determination of the inclination angle of the body component 10 with the acceleration sensor 41 is well known in the art. For example, the inclination angle of the body component 10 is determined by sensing the gravitational acceleration with the acceleration sensor 41. Since this determination is well known in the art, as mentioned above, the detail description will be omitted for the sake of brevity.

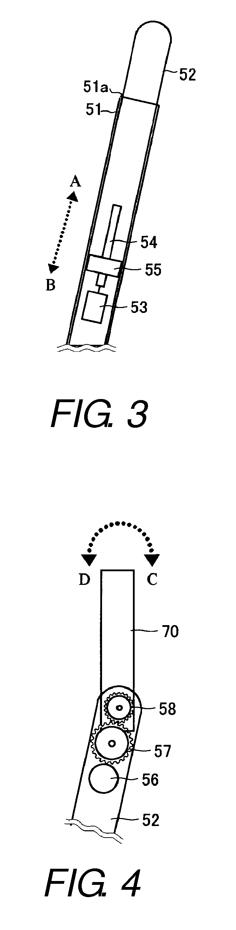

The support component 50 is a means for linking the body component 10 and the grip component 70. The support component 50 includes a cylindrical first frame 51 (e.g., a first part) that is fixed to the body component 10, and a cylindrical second frame 52 (e.g., a second part) that is inserted slidably with respect to the first frame 51. That is, the support component 50 is able to expand and contract, thereby adjusting the height of the grip component 70 as desired. In the illustrated embodiment, the position adjuster 90 serves as an adjustment mechanism of the length of the support component 50. The adjustment mechanism of the length of the support component 50 will be described in detail through reference to FIG. 3.

FIG. 3 is a schematic diagram of the adjustment mechanism for the length of the support component 50. The first frame 51 is in the form of a hollow cylinder in which an opening 51a is formed at the upper end. The diameter of the first frame 51 is greater than the diameter of the second frame 52. In particular, the inner diameter of the first frame 51 is equal to or slightly greater than the outer diameter of the second frame 52. The second frame 52 is inserted through the opening 51a into the first frame 51. The second frame 52 is also in the form of a hollow cylinder, just like the first frame 51. In the illustrated embodiment, the lower part of the first frame 51 is fixedly and non-rotatably coupled to the body component 10, while the second frame 52 is slidably coupled to the first frame 51.

The adjustment mechanism (e.g., the position adjuster 90) includes a motor 53, a male thread 54 that is connected to the motor 53, and a female thread 55 that meshes with the male thread 54 and is attached to the inner periphery of the second frame 52 in the lower interior part of the second frame 52. In the illustrated embodiment, the motor 53 is fixedly coupled to the first frame 51 or the body component 10. When the motor 53 rotates, its drive force is transmitted through the male thread 54 to the female thread 55, which moves the second frame 52 in an A direction or a B direction relative to the first frame 51. For example, when the motor 53 is rotated clockwise, the second frame 52 moves in the A direction, which expands the support component 50. On the other hand, when the rotation is counter-clockwise, the second frame 52 moves in the B direction, which contracts the support component 50. Thus, this allows the length of the support component 50 to be adjusted. The motor 53, the male thread 54, and the female thread 55 form part of the position adjuster 90.

Returning to FIGS. 1 and 2, the user interface 60 has a notification means for prompting the user to adjust the position of the grip component 70. The user interface 60 includes, for example, a display screen 61 and a speaker 62 as this notification means. The user interface 60 is preferably provided at a position that is easy for the user to operate (such as the grip component 70 at the eye level of the user as shown in FIG. 1).

The grip component 70 is a member gripped by the user while walking, and is linked via the support component 50 to the body component 10. The user holds the grip component 70 with one or both hands, and can add input force to move the walking assist cart 1 forward or backward, to brake, or to steer. Anti-slip grips 71 (a left grip 71L and a right grip 71R) are provided to the grip component 70, for example. The grips 71 are positions that are gripped by the user and define grip positions. The grip positions on a level road are stored as reference positions in the memory component 110 (discussed below). The grip component 70 is provided such that the angle of grip component 70 with respect to the second frame 52 of the support component 50 can be adjusted. In other words, the lower part of the grip component 70 is rotatably couple to the upper part of the second frame 52 of the support component 50. In the illustrated embodiment, the position adjuster 90 serves as an angle adjustment mechanism of the grip component 70. The angle adjustment mechanism of the grip component 70 will be described through reference to FIG. 4.

FIG. 4 is a schematic diagram of the angle adjustment mechanism for the grip component 70. The angle adjustment mechanism (e.g., the position adjuster 90) includes a motor 56, a reduction gear 57 connected to the motor 56, and an idler gear 58 that meshes with the reduction gear 57 and is fixedly attached to the grip component 70 in the upper interior part of the second frame 52. In the illustrated embodiment, the motor 56 is fixedly coupled to the second frame 52. When the motor 56 rotates, its drive force is transmitted through the reduction gear 57 to the idler gear 58. As a result, the grip component 70 is rotated in a C direction or a D direction relative to the second frame 52.

For example, when the motor 56 is rotated clockwise, the grip component 70 rotates in the C direction with respect to the second frame 52 and inclines toward the user. On the other hand, when the rotation is counter-clockwise, the grip component 70 rotates in the D direction with respect to the second frame 52 and inclines away from the user. Thus, this allows the angle of the grip component 70 to be adjusted with respect to the second frame 52. The motor 56, the reduction gear 57, and the idler gear 58 form part of the position adjuster 90. The rotation will be smoother if the rotary shaft of the grip component 70 is provided with a damper that makes use of viscoelasticity or a torsion spring.

The controller 80 is a logical circuit (a microprocessor or the like) that handles the overall control of the position adjuster 90, the user interface 60, and the detector 40. The controller 80 includes, for example, a function of adjusting the grip positions by driving the position adjuster 90 based on the detection result of the detector 40. The position adjuster 90 has the length adjustment mechanism for adjusting the length of the support component 50, and the angle adjustment mechanism for adjusting the inclination angle of the grip component 70 (discussed in detail below).

In the illustrated embodiment, the controller 80 includes a microprocessor or a microcomputer with a control program that controls various components of the walking assist cart 1, such as the position adjuster 90, the user interface 60, the detector 40, and the like. The controller 80 can also include other conventional components such as an input interface circuit, an output interface circuit, and storage devices such as a ROM (Read Only Memory) device and a RAM (Random Access Memory) device. The microcomputer of the controller is programmed to control the various components of the walking assist cart 1. The memory circuit stores processing results and control programs that are run by the microcomputer. The internal RAM of the controller 80 stores statuses of operational flags and various control data. The internal ROM of the controller 80 stores the programs for various operations. The controller 80 is capable of selectively controlling any of the components of the walking assist cart 1 in accordance with the control program. It will be apparent to those skilled in the art from this disclosure that the precise structure and algorithms for the controller 80 can be any combination of hardware and software that will carry out the functions of the present invention.

The power source 100 is used to supply power to the detector 40, the user interface 60, the controller 80, and the position adjuster 90. A secondary battery (such as a lithium ion battery or a nickel hydride battery) that can be installed in or removed from the body component 10 can be used as the power source 100. When the walking assist cat 1 (e.g., the hand cart) is used over only a small area, it can be equipped with a socket that can be connected to a commercial power supply, thereby the power being supplied to the various components.

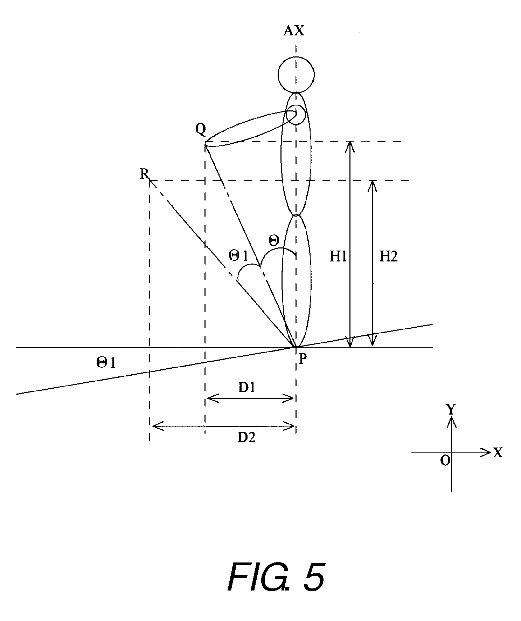

The memory component 110 is used to store various kinds of parameter necessary for the controller 80 to control the position adjuster 90. More specifically, it stores the reference position, the inclination angle and length of the support component 50, and the inclination angle and length of the grip component 70. When the length of the support component 50 and the angle of the grip component 70 have been adjusted, the length of the support component 50 and the angle of the grip component 70 after adjustment are also stored. The various parameters will be described through reference to FIGS. 5 to 7.

The reference position is a grip position (e.g., the position of the upper part of the grip component 70) centered on the feet of the user (e.g., point P) on level ground, and is, for example, the position of the point Q centered on the point P as shown in FIG. 5. The memory component 110 stores the height H1 in the Y axis direction and the distance D1 in the X axis direction from the point P to the point Q. The distance D1 and the height H1 can be inputted by the user, or can be calculated by the controller 80. The distance D1, for example, is calculated by pushing out the body component 10 from a state in which the user (e.g., the user body) is closest to the body component 10, stopping at the desired position, detecting the number of revolutions of the wheels 20 up to that point, and calculating based on the number of revolutions and the circumference of the wheels 20. The height H1 can be calculated based on the height of the body component 10, the inclination angle and length of the support component 50, and the inclination angle and length of the grip component 70.

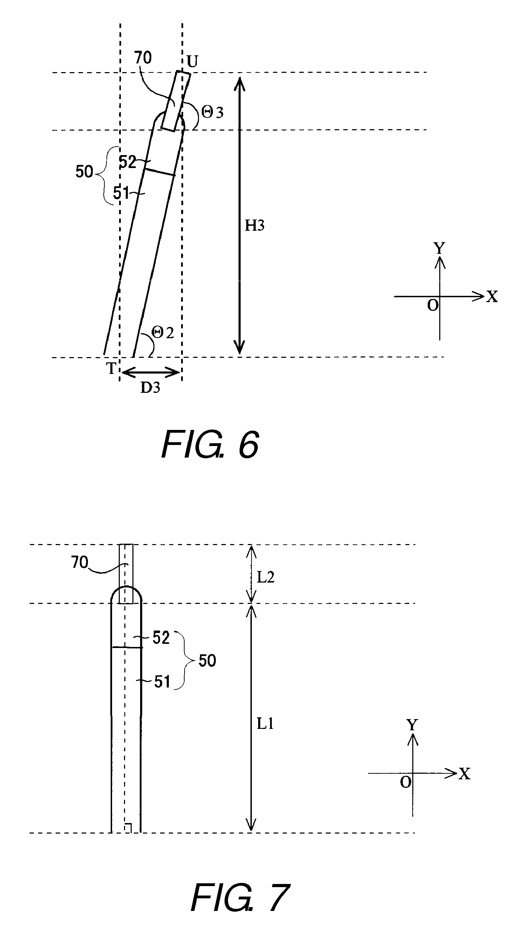

As shown in FIG. 6, the inclination angle of the support component 50 and the inclination angle of the grip component 70 are inclination angles with respect to the horizontal direction. The memory component 110 stores the inclination angle θ2 of the support component 50 and the inclination angle θ3 of the grip component 70. As shown in FIG. 7, the length of the support component 50 and the length of the grip component 70 are lengths in the vertical direction when the inclination angles of the support component 50 and the grip component 70 are set to 90 degrees. The memory component 110 stores the length L1 of the support component 50 and the length L2 of the grip component 70.

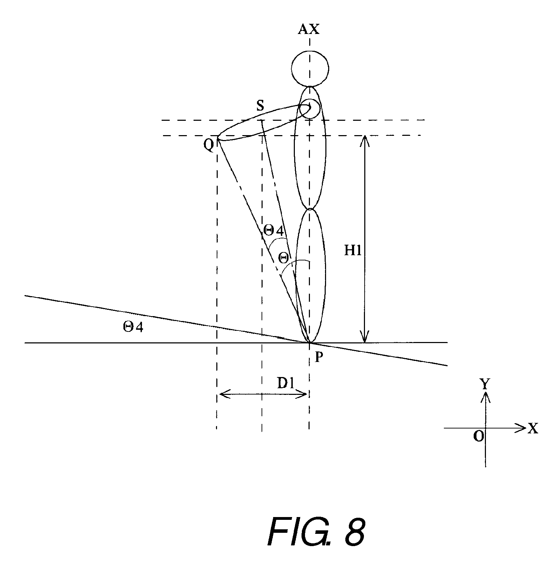

The method for adjusting the grip position will now be described in detail. As shown in FIG. 5, if the grip position is not adjusted, then on a downhill slope the grip position will move downward and farther away from the user in the forward direction than on the level or flat road. On the other hand, as shown in FIG. 8, if the grip position is not adjusted, then on an uphill slope the grip position will move upward and closer to the user than on the level or flat road. The controller 80 controls the drive of the position adjuster 90 so as to correct the displacement of the grip position caused by this slope of the road.

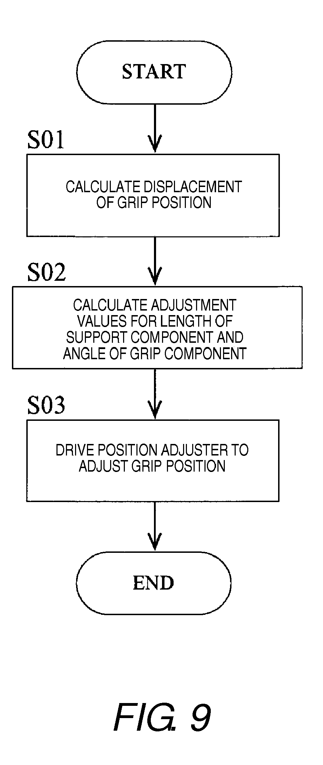

That is, the grip position is corrected such that on the downhill slope the grip position is moved upward and closer to the user, and such that on the uphill slope the grip position is moved downward and farther away from the user. With this correction, the user will be able to walk without changing the angle of his or her arms regardless of whether the road is flat or sloped. The processing executed by the controller 80 will be described through reference to FIG. 9. FIG. 9 is a flowchart of the processing executed by the controller 80.

In step S01, the controller 80 calculates displacement value of the grip position. This displacement value is calculated based on the detection result of the detector 40 and the information indicating the reference position stored in the memory component 110. The controller 80 calculates the length a from the point P to the point Q (i.e., the length of the line segment PQ) and the angle $\theta$ formed by the axis AX and the line segment PQ based on the reference position information (the distance D1 and the height H1) stored in the memory component 110. The axis AX is a vertical axis extending through the point P, for example. D1, H1, a, and $\theta$ are defined by the following equations (1) and (2).

$$\text{the square of a} = \text{the square of D1} + \text{the square of H1} \dots (1)$$

$$\tan\theta = D1/H1 \dots (2)$$

Here, in the illustrated embodiment, the inclination angle of the road detected by the detector 40 is expressed as $\theta 1$ (see FIG. 5). As shown in FIG. 5, the distance from the point P to the point Q is equal to the distance from the point P to the point R (i.e., equal to the length a). Also, the angle formed by the line segment PQ and the line segment PR is equal to the inclination angle $\theta 1$ of the road. Therefore, the grip positions after the displacement, that is, the distance D2 in the X axis direction and the height H2 in the Y axis direction from the point P to the point R, are expressed by the following equations (3) and (4).

$$D2 = a \times \sin(\theta + \theta 1) \dots (3)$$

$$H2 = a \times \cos(\theta + \theta 1) \dots (4)$$

Thus, the displacement value XD in the X axis direction and the displacement value YD in the Y axis direction from the reference position are expressed by the following equations (5) and (6).

$$XD = D1 - a \times \sin(\theta + \theta 1) \dots (5)$$

$$YD = H1 - a \times \cos(\theta + \theta 1) \dots (6)$$

In step S02, the controller 80 calculates adjustment values for the length L1 of the support component 50 and the inclination angle $\theta 3$ of the grip component 70 in order to correct the displacement values XD and YD of the grip position that has been calculated in step S01. For example, the distance D3 in the X axis direction and the height H3 in the Y axis direction from the point T to the point U at the support component 50 and the grip component 70 shown in FIG. 6 are expressed by the following equations (7) and (8). Here, point T indicates a position of one end of the support component 50 that is attached to the body component 10, while the point U is a position of a distal end of the grip component 70 that is located farthest from the body component 10.

$$D3 = L1 \times \cos\theta 2 + L2 \times \cos\theta 3 \dots (7)$$

$$H3 = L1 \times \sin\theta2 + L2 \times \sin\theta3 \ ... \ (8)$$

The length L1 of the support component 50 and the inclination angle θ3 of the grip component 70 are adjusted so as to correct the displacement values XD and YD in relation to the distance D3 and the height H3. If the length of the support component 50 and the inclination angle of the grip component 70 after adjustment are expressed by L1' and θ3', respectively, the following equations (9) and (10) are satisfied.

$$D3 - XD = L1' \times \cos\theta2 + L2 \times \cos\theta3' \ ... \ (9)$$

$$H3 - YD = L1' \times \sin\theta2 + L2 \times \sin\theta3' \ ... \ (10)$$

In step S03, the controller 80 adjusts the grip position by driving the position adjuster 90 based on the adjustment values that has been calculated in step S02. The length of the support component 50 is adjusted to the calculated length based on the speed the motor 53, the pitch of the male thread 54, and the pitch of the female thread 55. Also, the inclination angle of the grip component 70 is adjusted to the calculated angle based on the speed of the motor 56, the pitch of the reduction gear 57, and the pitch of the idler gear 58.

In the illustrated embodiment, the downhill slope is used to explain the operation of the controller 80 above. However, the same calculation is possible with the uphill slope shown in FIG. 8. Specifically, in the case shown in FIG. 8, the displacement values XD and YD are expressed by the following equations (11) and (12). Also, if the length of the support component 50 and the inclination angle of the grip component 70 after the adjustment are expressed by L1" and θ3", respectively, the following equations (13) and (14) are satisfied.

$$XD = D1 - a \times \sin(\theta - \theta4) \ ... \ (11)$$

$$YD = H1 - a \times \cos(\theta - \theta4) \ ... \ (12)$$

$$D3 - XD = L1" \times \cos\theta2 + L2 \times \cos\theta3" \ ... \ (13)$$

$$H3 - YD = L1" \times \sin\theta2 + L2 \times \sin\theta3" \ ... \ (14)$$

With this embodiment, the displacement values of the grip position from the reference position based on the inclination of the body component 10 is corrected by the position adjustment mechanism. Therefore, the user can move in a comfortable posture without having to manually adjust the grip position according to changes in the slope of the ground.

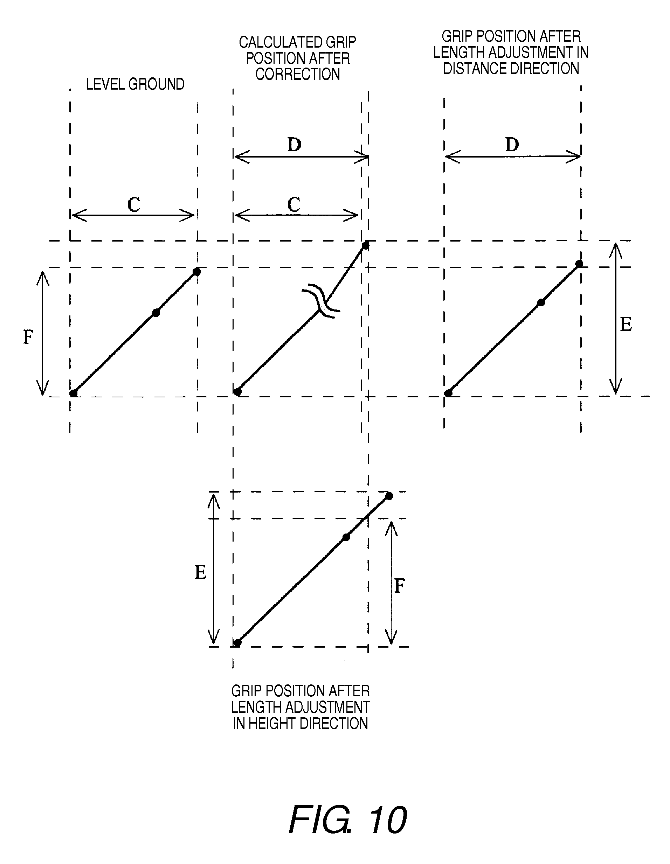

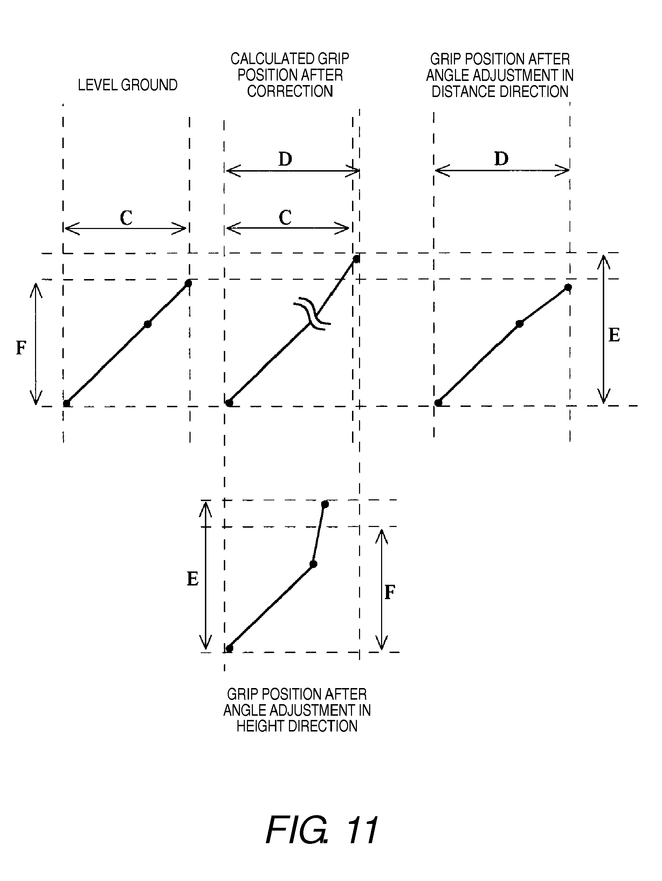

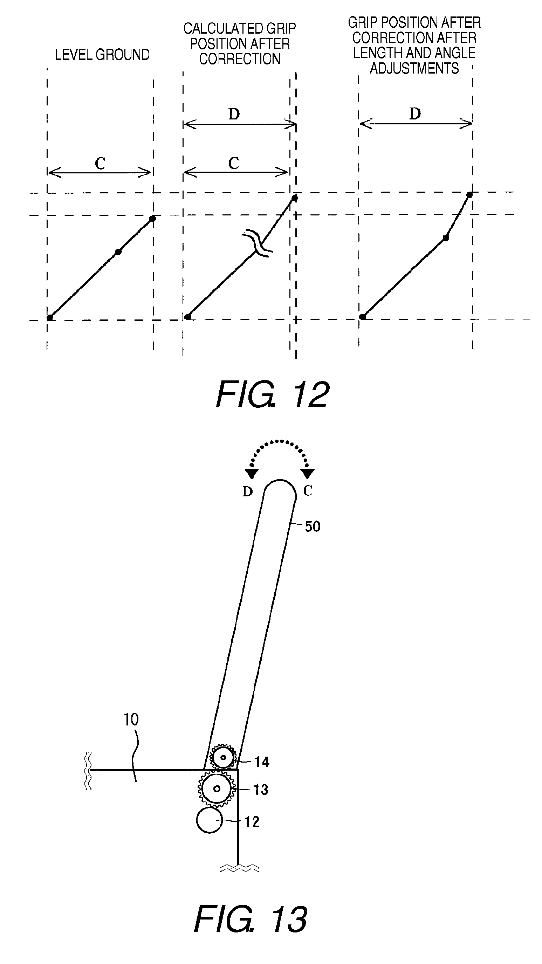

As shown in FIGS. 10 to 12, in the illustrated embodiment, the adjustment of the grip position (e.g., the grip position (D) in the distance direction and the grip position (E) in the height direction) is accomplished by adjusting the length of the support component 50 and the angle of the grip component 70. Thus, the grip position (D and E) can be suitably adjusted to correspond to the grip position on the level ground (C and F) in terms of height and distance from the user. Specifically, when just the length of the support component 50 is adjusted, for example, as shown in FIG. 10, even if the grip position in the distance direction with respect to the user is adjusted to the grip position (D) corresponding to the grip position (C) of the level ground, the grip position in the height direction will not match to the grip position (E) corresponding to the grip position (F) of the level ground. On the other hand, even if the grip position in the height direction is adjusted to the grip position to the grip position (E) corresponding to the grip position (F) of the level ground, the grip position in the distance direction will not match to the grip position (D) corresponding to the grip position (C) of the level ground. Also, when just the angle of the grip component 70 is adjusted, for example, as shown in FIG. 11, even if the grip position in the distance direction with respect to the user is adjusted to the grip position (D) corresponding to the grip position (C) of the level ground, the grip position in the height direction will not match to the grip position (E) corresponding to the grip position (F) of the level ground. On the other hand, even if the grip position in the height direction is adjusted to the grip position (E) corresponding to the grip position (F) of the level ground, the grip position in the distance direction will not match to the grip position (D) corresponding to the grip position (C) of the level ground. In the illustrated embodiment, the grip position is adjusted by adjusting the length of the support component 10 and the angle of the grip component 70 as shown in FIG. 12. Thus, the grip positions in the distance direction and the height direction with respect to the user can be adjusted to match to that of the level ground. In FIGS. 10 to 12, arrows that are numbered the same indicate the same length (i.e., the distance and the height).

Also, in the illustrated embodiment, the controller 80 user interface 60 (e.g., notification means) can give a message to the user through the the user interface 60 (e.g., the notification means), such as the display screen 61 or the speaker 62, prior to the adjustment of the grip position. Thus, the user can be warned to pay attention before the adjustment of the grip position.

SECOND EMBODIMENT

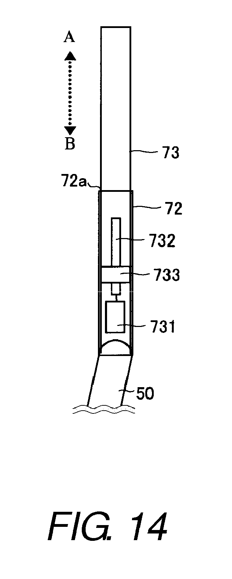

Referring now to FIGS. 13 and 14, a walking assist cart in accordance with a second embodiment will now be explained. In view of the similarity between the first and second embodiments, the parts of the second embodiment that are identical to or correspond to the parts of the first embodiment will be given the same reference numerals as the parts of the first embodiment. Moreover, the descriptions of the parts of the second embodiment that are identical to the parts of the first embodiment may be omitted for the sake of brevity.

In the first embodiment, the method for adjusting the grip position includes adjusting of the length of the support component 50 and the inclination angle of the grip component 70. However, this is not the only option. The method for adjusting the grip position can include adjusting of the length of the support component 50 or the grip component 70, and adjusting of the inclination angle of the support component 50 or the grip component 70. Modification examples will be described in the following embodiments. In the following embodiments, those portions that are the same as in the first embodiment will not be described again.

Referring to FIGS. 13 and 14, a method for adjusting the grip position with the walking assist cart in accordance with the second embodiment will be described. In this embodiment, the inclination angle of the support component 50 and the length of the grip component 70 are adjusted. FIG. 13 is a schematic diagram of an angle adjustment mechanism of the support component 50. FIG. 14 is a schematic diagram of a length adjustment mechanism of the grip component 70.

As shown in FIG. 13, in the illustrated embodiment, the lower part of the support component 50 is rotatably coupled to the body component 10. As shown in FIG. 13, the angle adjustment mechanism (e.g., the position adjuster 90 in FIG. 2) includes a motor 12, a reduction gear 13 connected to the motor 12, and an idler gear 14 that meshes with the reduction gear 13 and is fixedly attached to the support component 50. As shown in FIG. 13, the motor 12 and the reduction gear 13 are disposed in the interior of the body component 10, and the idler gear 14 is fixedly coupled to one end of the support component 50. When the motor 12 rotates, its drive force is transmitted through the reduction gear 13 to the idler gear 14, and the support component 50 is rotated in the C direction or the D direction.

For example, when the motor 12 is rotated clockwise, the support component 50 rotates in the C direction with respect to the body component 10. On the other hand, when the motor 12 is rotated counter-clockwise, the support component 50 rotates in the D direction with respect to the body component 10. This allows the angle of the support component 50 to be adjusted with respect to the body component 10.

Also, as shown in FIG. 14, the grip component 70 in this embodiment includes a cylindrical first frame 72 (e.g., a first part) that is fixed to the other end of the support component 50, and a cylindrical second frame 73 (e.g., a second part) that is inserted slidably with respect to the first frame 72.

The first frame 72 is in the form of a hollow cylinder in which an opening 72a is formed at the upper end. The diameter of the first frame 72 is greater than the diameter of the second frame 73. In particular, the inner diameter of the first frame 72 is equal to or slightly greater than the outer diameter of the second frame 73. The second frame 73 is inserted through the opening 72a into the first frame 72. The second frame 73 is also in the form of a hollow cylinder, just like the first frame 72. In the illustrated embodiment, the lower part of the first frame 72 is fixedly and non-rotatably coupled to the upper part of the support component 50, while the second frame 73 is slidably coupled to the first frame 72.

The length adjustment mechanism (e.g., the position adjuster 90) includes a motor 731, a male thread 732 that is connected to the motor 731, and a female thread 733 that meshes with the male thread 732 and is attached to the inner periphery of the second frame 73 in the lower interior part of the second frame 73. In the illustrated embodiment, the motor 731 is fixedly coupled to the other end of the support component 50. When the motor 731 rotates, its drive force is transmitted through the male thread 732 to the female thread 733, which moves the second frame 73 in the A direction or the B direction relative to the first frame 72. For example, when the motor 731 is rotated clockwise, the second frame 73 moves in the A direction, and when the rotation is counter-clockwise, the second frame 73 moves in the B direction.

The walking assist cart in accordance with the second embodiment also has the same effect as the first embodiment.

THIRD EMBODIMENT

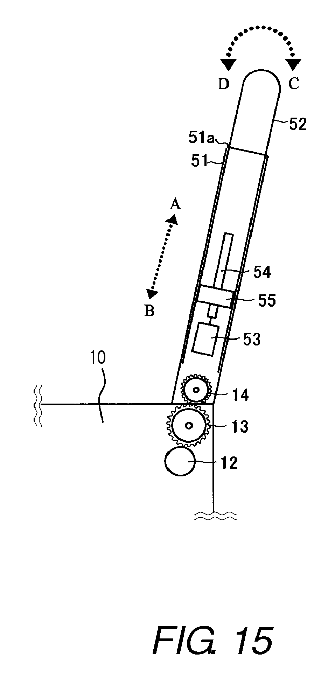

Referring now to FIG. 15, a walking assist cart in accordance with a third embodiment will now be explained. In view of the similarity between the first and third embodiments, the parts of the third embodiment that are identical to or correspond to the parts of the first embodiment will be given the same reference numerals as the parts of the first embodiment. Moreover, the descriptions of the parts of the third embodiment that are identical to the parts of the first embodiment may be omitted for the sake of brevity.

In this embodiment, the inclination angle and length of the support component 50 are adjusted for adjusting the grip position. FIG. 15 is a schematic diagram of an angle adjustment mechanism and a length adjustment mechanism of the support component 50.

As shown in FIG. 15, the angle adjustment mechanism (e.g., the position adjuster 90 in FIG. 2) includes the motor 12, the reduction gear 13 connected to the motor 12, and the idler gear 14 that meshes with the reduction gear 13 and is fixedly attached to the support component 50. As shown in FIG. 15, the motor 12 and the rejection gear 13 are disposed in the interior of the body component 10, and the idler gear 14 is fixedly coupled to one end of the support component 50. When the motor 12 rotates, its drive force is transmitted through the reduction gear 13 to the idler gear 14, and the support component 50 is rotated in the C direction or the D direction.

In the illustrated embodiment, the support component 50 includes the cylindrical first frame 51 (e.g., the first part) that is rotatably attached to the body component 10, and the cylindrical second frame 52 (e.g., the second part) that is inserted slidably with respect to the first frame 51.

The first frame 51 is in the form of a hollow cylinder in which the opening 51 a is formed at the upper end. The diameter of the first frame 51 is greater than the diameter of the second frame 52. In particular, the inner diameter of the first frame 51 is equal to or slightly greater than the outer diameter of the second frame 52. The second frame 52 is inserted through the opening 51a into the first frame 51. The second frame 52 is also in the form of a hollow cylinder, just like the first frame 51. As shown in FIG. 15, in the illustrated embodiment, the lower part of the first frame 51 is rotatably coupled to the body component 10. Also, the second frame 52 is slidably coupled to the first frame 51.

The length adjustment mechanism (e.g., the position adjuster 90) includes a motor 53, a male thread 54 that is connected to the motor 53, and a female thread 55 that meshes with the male thread 54 and is attached to the inner periphery of the second frame 52 in the lower interior part of the second frame 52. In the illustrated embodiment, the motor 53 is fixedly coupled to the first frame 51. When the motor 53 rotates, its drive force is transmitted through the male thread 54 to the female thread 55, which moves the second frame 52 in the A direction or the B direction relative to the first frame 51. For example, when the motor 53 is rotated clockwise, the second frame 52 moves in the A direction, and when the rotation is counter-clockwise, the second frame 52 moves in the B direction.

The walking assist cart in accordance with the third embodiment also has the same effect as the first embodiment. Although not illustrated in FIG. 15, in the illustrated embodiment, the lower part of the grip component 70 is fixedly and non-rotatably coupled to the upper part of the second frame 52 of the support component 10.

FOURTH EMBODIMENT

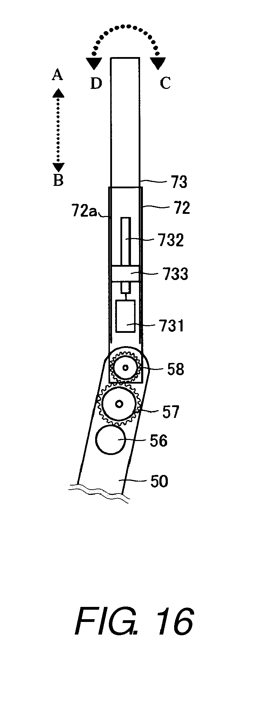

Referring now to FIG. 16, a walking assist cart in accordance with a fourth embodiment will now be explained. In view of the similarity between the first and fourth embodiments, the parts of the fourth embodiment that are identical to or correspond to the parts of the first embodiment will be given the same reference numerals as the parts of the first embodiment. Moreover, the descriptions of the parts of the fourth embodiment that are identical to the parts of the first embodiment may be omitted for the sake of brevity.

In this embodiment, the inclination angle and length of the grip component 70 are adjusted for adjusting the grip position. FIG. 16 is a schematic diagram of an angle adjustment mechanism and a length adjustment mechanism of the grip component 70.

As shown in FIG. 16, the angle adjustment mechanism (e.g., the position adjuster 90 in FIG. 2) includes the motor 56, the reduction gear 57 connected to the motor 56, and the idler gear 58 that meshes with the reduction gear 57 and is fixedly attached to the grip component 70 in the upper part of the interior of the support component 50. When the motor 56 rotates, its drive force is transmitted through the reduction gear 57 to the idler gear 58, and the grip component 70 is rotated in the C direction or the D direction relative to the support component 50. Although not illustrated in FIG. 16, the lower part of the support component 50 is fixedly and non-rotatably coupled to the body component 10.

In the illustrated embodiment, the grip component 70 includes the cylindrical first frame 72 (e.g., the first part) that is rotatably attached to the distal end of the support component 50, and the cylindrical second frame 73 (e.g., the second part) that is inserted slidably with respect to the first frame 72.

The first frame 72 is in the form of a hollow cylinder in which an opening 72a is formed at the upper end. The diameter of the first frame 72 is greater than the diameter of the second frame 73. In particular, the inner diameter of the first frame 72 is equal to or slightly greater than the outer diameter of the second frame 73. The second frame 73 is inserted through the opening 72a into the first frame 72. The second frame 73 is also in the form of a hollow cylinder, just like the first frame 72. As shown in FIG. 16, in the illustrated embodiment, the lower part of the first frame 72 is rotatably coupled to the upper part of the support component 50. Also, the second frame 73 is slidably coupled to the first frame 72.

The length adjustment mechanism (e.g., the position adjuster 90) includes the motor 731, the male thread 732 that is connected to the motor 731, and the female thread 733 that meshes with the male thread 732 and is attached to the inner periphery of the second frame 73 in the lower interior part of the second frame 73. In the illustrated embodiment, the motor 731 is fixedly coupled to the first frame 72. When the motor 731 rotates, its drive force is transmitted through the male thread 732 to the female thread 733, which moves the second frame 73 in the A direction or the B direction relative to the first frame 72. For example, when the motor 731 is rotated clockwise, the second frame 73 moves in the A direction, and when the rotation is counter-clockwise, the second frame 73 moves in the B direction.

The walking assist cart in accordance with the fourth embodiment has the same effect as the first embodiment.

In the above embodiments, the length adjustment mechanism for adjusting the length of the support component 50 or the grip component 70 and the angle adjustment mechanism for adjusting the inclination angle of the support component 50 or the grip component 70 are provided as the position adjuster 90. However, if the walking assist cart (e.g., the hand cart) is merely used in a situation in which the inclination angle of the body component 10 is minute due to the usage application, etc., then just the length adjustment mechanism or the angle adjustment mechanism can be provided as the position adjuster 90. In this case, it is possible to adjust the grip position properly enough by adjusting only the length or the angle.

Also, the control of the adjustment of the grip position by the controller 80 can be performed at either regular or irregular intervals. If it is performed at irregular intervals, then the control of the adjustment of the grip position is performed when the inclination angle of the body component 10 has gone over a predetermined threshold.

Also, in the illustrated embodiments, the controller 80 calculates the displacement values and the adjustment values according to the inclination angle of the body component 10. However, a table of the adjustment values corresponding to the inclination angle of the body component 10 can be stored in the memory component 110, and the controller 80 can control the position adjuster 90 by referring to this correspondence table. Of course, the controller 80 can calculate or obtain the adjustment values in a different manner as long as the position adjuster 90 can be controlled so as to correct the displacement of the grip position due to the inclination of the body component 10.

Also, in the illustrated embodiments, the reference position is a grip position centered on the feet of the user (e.g., the point P) on the level ground. However, the center can be set to any other positions as long as the displacement of the grip position can be ascertained. For example, the distance of the grip position centered on the point T shown in FIG. 6 can be used instead. In this case, the position adjuster 90 corrects the displacement of the position of the point U with respect to the point T (the distance in the horizontal direction and the distance in the vertical (gravity) direction) due to the inclination of the body component 10.

In the first and fourth embodiments, the first frame 51 of the support component 50 or the support component 50 is described as being fixedly and non-rotatably coupled to the body component 10. However, of course, the first frame 51 of the support component 50 or the support component 50 can be manually and angularly adjustable relative to the body component 10. In this case, the inclination angle of the support component 50 stored in the memory component 110 will be updated in accordance with the adjustment. Similarly, the first frame 72 of the grip component 70 or the grip component 70 in accordance with the second or third embodiment can also be manually and angularly adjustable relative to the support component 50 or the second frame 52 of the support component 50. In this case, the inclination angle of the support component 70 stored in the memory component 110 will be updated in accordance with the adjustment.

The hand cart of the present invention includes a body component, a grip component, a support component, a position adjustment mechanism, and a controller. The grip component is arranged relative to the body component at a grip position. The support component is arranged to link the body component and the grip component. The position adjustment mechanism is configured to adjust the grip position of the grip component. The controller is configured to operate the position adjustment mechanism such that displacement of the grip position with respect to a reference position due to an inclination of the body component is corrected.

With the hand cart configured as above, the position adjustment mechanism can include a length adjustment mechanism that is configured to adjust one of a length of the support component and a length of the grip component.

With the hand cart configured as above, the support component can have a first part that is attached to the body component, and a second part that is slidably coupled to the first part. The length adjustment mechanism can be configured to move the second part relative to the first part to adjust the length of the support component.

With the hand cart configured as above, the position adjustment mechanism can include an angle adjustment mechanism that is configured to adjust one of an angle of the support component with respect to the body component and an angle of the grip component with respect to the support component.

With the hand cart configured as above, the grip component can be rotatably coupled to the second part of the support component, and the angle adjustment mechanism can be configured to rotate the grip component relative to the second part of the support component to adjust the angle of the grip component with respect to the support component.

With the hand cart configured as above, the first part of the support component can be rotatably coupled to the body component, and the angle adjustment mechanism can be configured to rotate the first part of the support component relative to the body component to adjust the angle of the support component with respect to the body component.

With the hand cart configured as above, the grip component can have a first part that is attached to the support component, and a second part that is slidably coupled to the first part. The length adjustment mechanism can be configured to move the second part relative to the first part to adjust the length of the grip component.

With the hand cart configured as above, the position adjustment mechanism can include an angle adjustment mechanism that is configured to adjust one of an angle of the support component with respect to the body component and an angle of the grip component with respect to the support component.

With the hand cart configured as above, the support component can be rotatably coupled to the body component, and the angle adjustment mechanism can be configured to rotate the support component relative to the body component to adjust the angle of the support component with respect to the body component.

With the hand cart configured as above, the first part of the grip component can be rotatably coupled to the support component, and the angle adjustment mechanism can be configured to rotate the first part of the grip component relative to the support component to adjust the angle of the grip component with respect to the support component.

With the hand cart configured as above, the position adjustment mechanism can include an angle adjustment mechanism that is configured to adjust one of an angle of the support component with respect to the body component and an angle of the grip component with respect to the support component.

With the hand cart configured as above, the hand cart can further includes a memory component that is configured to store the reference position.

With the hand cart configured as above, the controller is further configured to output a message on an adjustment of the grip position before correcting the displacement of the grip position with respect to the reference position by the position adjustment mechanism.

With the hand cart configured as above, the hand cart further includes a detector configured to detect the inclination of the body component.

With the hand cart configured as above, the controller can be further configured to calculate the displacement of the grip position with respect to the reference position based on the inclination of the body component detected by the detector.

With the present invention, displacement value of the grip position relative to the reference position due to the inclination of the body component is corrected to this reference position by the position adjustment mechanism. Therefore, the user can move in a comfortable posture, with no trouble, and without having to adjust the grip position manually according to changes in the slope of the ground.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

**Claims**

1. A hand cart comprising:

   a body component;
   a grip component arranged relative to the body component at a grip position;
   a support component arranged to link the body component and the grip component;
   a position adjustment mechanism configured to adjust the grip position of the grip component; and
   a controller configured to operate the position adjustment mechanism such that displacement of the grip position with respect to a reference position due to an inclination of the body component is corrected.

2. The hand cart according to claim 1, wherein
   the position adjustment mechanism includes a length adjustment mechanism that is configured to adjust one of a length of the support component and a length of the grip component.

3. The hand cart according to claim 1 or 2, wherein
   the support component has a first part that is attached to the body component, and a second part that is slidably coupled to the first part, and
   the length adjustment mechanism is configured to move the second part relative to the first part to adjust the length of the support component.

4. The hand cart according to claim 1, 2 or 3, wherein
   the position adjustment mechanism includes an angle adjustment mechanism that is configured to adjust one of an angle of the support component with respect to the body component and an angle of the grip component with respect to the support component.

5. The hand cart according to any one claims 1 to 4, wherein
   the grip component is rotatably coupled to the second part of the support component, and
   the angle adjustment mechanism is configured to rotate the grip component relative to the second part of the support component to adjust the angle of the grip component with respect to the support component.

6. The hand cart according to any one of claims 1 to 5, wherein
   the first part of the support component is rotatably coupled to the body component, and
   the angle adjustment mechanism is configured to rotate the first part of the support component relative to the body component to adjust the angle of the support component with respect to the body component.

7. The hand cart according to any one of claims 1 to 6, wherein
   the grip component has a first part that is attached to the support component, and a second part that is slidably coupled to the first part, and
   the length adjustment mechanism is configured to move the second part relative to the first part to adjust the length of the grip component.

8. The hand cart according to any one of claims 1 to 7, wherein
   the position adjustment mechanism includes an angle adjustment mechanism that is configured to adjust one of an angle of the support component with respect to the body component and an angle of the grip component with respect to the support component.

**9.** The hand cart according to any one of claims 1 to 8, wherein
the support component is rotatably coupled to the body component, and
the angle adjustment mechanism is configured to rotate the support component relative to the body component to adjust the angle of the support component with respect to the body component.

**10.** The hand cart according to any one of claims 1 to 9, wherein
the first part of the grip component is rotatably coupled to the support component, and
the angle adjustment mechanism is configured to rotate the first part of the grip component relative to the support component to adjust the angle of the grip component with respect to the support component.

**11.** The hand cart according to any one of claims 1 to 10, wherein
the position adjustment mechanism includes an angle adjustment mechanism that is configured to adjust one of an angle of the support component with respect to the body component and an angle of the grip component with respect to the support component.

**12.** The hand cart according to any one of claims 1 to 11, further comprising
a memory component configured to store the reference position.

**13.** The hand cart according to any one of claims 1 to 12, wherein
the controller is further configured to output a message on an adjustment of the grip position before correcting the displacement of the grip position with respect to the reference position by the position adjustment mechanism.

**14.** The hand cart according to any one of claims 1 to 13, further comprising
a detector configured to detect the inclination of the body component.

**15.** The hand cart according to claim 14, wherein
the controller is further configured to calculate the displacement of the grip position with respect to the reference position based on the inclination of the body component detected by the detector.

FIG. 1

100

POWER SOURCE

40

DETECTOR

41

ACCELERATION SENSOR

42

GPS SENSOR

80

CONTROLLER

90

POSITION ADJUSTER (ELECTRICALLY POWERED STRUCTURE)

110

MEMORY COMPONENT

60

61

DISPLAY SCREEN

62

SPEAKER

USER INTERFACE

FIG. 2

FIG. 3

FIG. 4

FIG. 5

*FIG. 6*

*FIG. 7*

FIG. 8

START

S01

CALCULATE DISPLACEMENT
OF GRIP POSITION

S02

CALCULATE ADJUSTMENT
VALUES FOR LENGTH OF
SUPPORT COMPONENT AND
ANGLE OF GRIP COMPONENT

S03

DRIVE POSITION ADJUSTER TO
ADJUST GRIP POSITION

END

*FIG. 9*

LEVEL GROUND

CALCULATED GRIP
POSITION AFTER
CORRECTION

GRIP POSITION AFTER
LENGTH ADJUSTMENT IN
DISTANCE DIRECTION

D

C

C

D

F

E

E

F

GRIP POSITION AFTER
LENGTH ADJUSTMENT
IN HEIGHT DIRECTION

*FIG. 10*

LEVEL GROUND

CALCULATED GRIP
POSITION AFTER
CORRECTION

GRIP POSITION AFTER
ANGLE ADJUSTMENT IN
DISTANCE DIRECTION

GRIP POSITION AFTER
ANGLE ADJUSTMENT IN
HEIGHT DIRECTION

*FIG. 11*

LEVEL GROUND

CALCULATED GRIP
POSITION AFTER
CORRECTION

GRIP POSITION AFTER
CORRECTION AFTER
LENGTH AND ANGLE
ADJUSTMENTS

## FIG. 12

## FIG. 13

FIG. 14

FIG. 15

FIG. 16

Europäisches
Patentamt
European
Patent Office
Office européen
des brevets

# EUROPEAN SEARCH REPORT

Application Number

EP 14 17 5676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 029564 A1 (MEDICA MEDIZINTECHNIK GMBH [DE]) 24 December 2009 (2009-12-24) | 1,4,6, 8-15 | INV. A61H3/04 |
| Y | * the whole document * | 2,3,5,7 | |
| Y | GB 2 410 228 A (LINDE AG [DE]) 27 July 2005 (2005-07-27) * the whole document * | 2,3,5,7 | |
| A | DE 196 14 411 A1 (MATSUSHITA ELECTRIC WORKS LTD [JP]) 17 October 1996 (1996-10-17) * the whole document * | 1-15 | |
| A | US 2006/260857 A1 (KAKINUMA TAKEKAZU [JP] ET AL) 23 November 2006 (2006-11-23) * the whole document * | 1-15 | |
| A | DE 10 2011 114337 A1 (VON LOEBBECKE BERND [DE]) 28 March 2013 (2013-03-28) * the whole document * | 1-15 | |

TECHNICAL FIELDS SEARCHED (IPC)

A61H
B62B

The present search report has been drawn up for all claims

| Place of search | Date of completion of the search | Examiner |
|---|---|---|
| Munich | 22 January 2015 | Lindner, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 5676

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2015

| Patent document cited in search report | Publication date | Patent family member(s) | | Publication date |
|---|---|---|---|---|
| DE 102008029564 A1 | 24-12-2009 | NONE | | |
| GB 2410228 A | 27-07-2005 | DE 102004003331 A1 | | 11-08-2005 |
| | | FR 2865723 A1 | | 05-08-2005 |
| | | GB 2410228 A | | 27-07-2005 |
| DE 19614411 A1 | 17-10-1996 | DE 19614411 A1 | | 17-10-1996 |
| | | JP 3032698 B2 | | 17-04-2000 |
| | | JP H08282498 A | | 29-10-1996 |
| | | US 5746282 A | | 05-05-1998 |
| US 2006260857 A1 | 23-11-2006 | JP 4650327 B2 | | 16-03-2011 |
| | | JP 2006315666 A | | 24-11-2006 |
| | | US 2006260857 A1 | | 23-11-2006 |
| | | US 2007251735 A1 | | 01-11-2007 |
| | | US 2009032323 A1 | | 05-02-2009 |
| DE 102011114337 A1 | 28-03-2013 | DE 102011114337 A1 | | 28-03-2013 |
| | | WO 2013041666 A1 | | 28-03-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013142687 A
- JP 3152568 B